# EUROPÄISCHE PATENTANMELDUNG

(11) **EP 3 951 032 A1**
(43) Veröffentlichungstag der Anmeldung: **09.02.2022**
(21) Anmeldenummer: 21187711.3
(22) Anmeldetag: 26.07.2021
(51) Int. Cl.: D01G 31/00, G01N 33/36

(54) **FASERVORBEREITUNGSMASCHINE**

(30) Priorität: 05.08.2020 CH 9742020
(71) Anmelder: Maschinenfabrik Rieter AG, 8406 Winterthur (CH)
(72) Erfinder: GRIESSHAMMER, Christian, 8267 Berlingen (CH); WOLFER, Tobias, 8595 Altnau (CH); CEVONA, Petr, 56201 Usti nad Orlici (CZ)

(57) **Zusammenfassung**

Die Erfindung betrifft eine Faservorbereitungsmaschine (1, 13, 17, 25) zur Bearbeitung von Fasergut (4) mit einem Speicher (3, 15, 24) oder Füllschacht (18) zur Bevorratung des Faserguts vor oder nach der Bearbeitung wobei eine in den Innenraum des Speichers (3, 15, 24) oder Füllschachts (18) gerichtete Kamera (10) vorgesehen ist. Eine Sichtachse (11) der Kamera (10) ist mit einem Winkel (α) zu einer Vertikalen (12) auf eine Oberfläche (5) des Faserguts (4) in einem Bereich von plus 30 Winkelgraden bis minus 30 Winkelgraden ausgerichtet. Die Kamera (10) weist eine Auflösung zur Detektion von einem Partikel mit einer Ausdehnung von 0.1 mm² auf der Oberfläche (5) des Faserguts (4) auf.

## Beschreibung

Die Erfindung betrifft eine neuartige Faservorbereitungsmaschine zur Bearbeitung von Fasergut.

In einer Faservorbereitungsanlage in einer Spinnerei wird mit Hilfe von Faservorbereitungsmaschinen angeliefertes Fasergut in Form von Fasern oder Faserflocken für die Verwendung in einer Spinnmaschine vorbereitet. In einer Faservorbereitungsanlage durchlaufen die für die Spinnerei vorzubereitenden Fasern mehrere Verarbeitungsstufen. In einer ersten Stufe werden die Fasern in Form von Faserflocken aus Faserballen herausgelöst. Hierfür finden meist sogenannte Ballenöffner Verwendung. Über eine pneumatische Flockenförderung werden diese Faserflocken aus dem Ballenöffner herausgebracht und beispielsweise an eine nachfolgende Reinigungsmaschine verbracht. In den weiteren Stufen weist die Faservorbereitungsanlage eine Abfolge von Reinigungsmaschinen auf, welche von den Fasern respektive Faserflocken durchlaufen werden. Die Reinigungsmaschinen sind dabei in ihrer Abfolge und Bauart auf die zu verarbeitenden Fasern abgestimmt und dienen der Reinigung, Mischung und der Auflösung der Faserflocken in Einzelfasern sowie deren Parallelisierung. Die Anordnung der einzelnen Reinigungsmaschinen in einer Faservorbereitungsanlage kann verschieden ausgeführt sein, dies ist unter anderem abhängig vom zu verarbeitenden Rohstoff und dem zu erzielenden Produkt.

Als Faservorbereitungsmaschinen kommen dabei beispielsweise Grobreiniger, Feinreiniger, Fremdteilabscheider, Mischer, Öffner wie auch Karden, Krempel oder Strecken zum Einsatz. Auch andersartige Maschinen wie beispielsweise Zwischenspeicher, Sammler oder Kämmmaschinen sind den Faservorbereitungsmaschinen zuzuordnen. Abhängig von der Bauart der einzelnen Faservorbereitungsmaschine sind diese mit einem Vorratsbehälter, einem Speicher, einem Sammelbehälter oder auch einem Füllschacht oder Mischkammer ausgerüstet. Im Sinne dieser Anmeldung wird auch ein Speicher von Fasergut als solcher bezeichnet, wenn dieser aus einer Ansammlung von Fasergut besteht ohne einen eigentlichen Behälter darzustellen. Beispielsweise sind auch die am Anfang des Prozesses stehenden Faserballen als Speicher zu betrachten.

In verschiedenen Prozessen wird das durch eine Faservorbereitungsmaschine fertig bearbeitete Fasergut in sogenannte Kannen abgelegt, meist in Form von Faserbändern. Auch diese Kannen stellen einen Speicher im Sinne dieser Anmeldung dar.

Faservorbereitungsmaschinen mit einem Speicher respektive einer Kammer zur Bevorratung oder Aufbewahrung von Fasergut aufweisen werden zur Beurteilung des Zustandes des Fasergutes genutzt. Meist sind Speicher mit Sichtfenstern versehen, sodass Bedienpersonal sehen kann wie sich das Fasergut verhält respektive welchen optischen Eindruck das Fasergut auf den Betrachter ausübt. Entsprechend wird das Bedienpersonal in den laufenden Prozess eingreifen falls die persönliche Beurteilung dies als notwendig erachten lässt.

Es wurden in der Folge verschiedene Vorschläge gemacht, diesen Bewertungsvorgang zu automatisieren. Dabei wurde der Fokus vor allem auf die Erkennung von nicht dem Fasergut zuträglichen und dem späteren Spinnprozess schädlichen Stoffe gelegt. Beispielsweise zeigen die EP 3 473 755 A1 oder auch die DE 10 2015 118 848 A1 Vorrichtungen zur Erkennung von Fremdstoffen respektive Fremdteilen und deren Ausschleusung aus einem Fasermaterialstrom im laufenden Prozess. Das Fasermaterial wird dabei an den Lichtquellen und entsprechenden Sensoren oder Kameras vorbeigeführt oder durch einen Inspektionskanal transportiert. Sobald die Sensorik ein Fremdteil erkennen wird dieses in der Folge aus dem Fasermaterial ausgeschleust. Nachteilig an diesen Vorrichtungen ist, dass einerseits ein Fasermaterialstrom notwendig ist und andrerseits nur Fremdmaterial erkannt werden kann. Eine Aussage zur Qualität oder Zustand des Fasermaterials ist jedoch nicht möglich, da keine Erfassung des gesamten Fasermaterialstroms erfolgt.

Weiter offenbart die EP 0 412 447 A eine Vorrichtung zur Erkennung von Fremdstoffen in Faserballen welche einem Ballenöffner vorgelegt werden. Dabei wird die Oberfläche der Faserballen abgetastet zur Ermittlung von Fremdkörpern in Form von Fremdfasern und Folienresten, beispielsweise Verpackungsresten, wie Jutesackresten, Plastikfolienresten, Schnüren oder Bändern, Lumpen oder Putzfäden. Nachteilig ist auch an dieser Vorrichtung, dass eine Aussage zur Qualität oder Zustand des Fasermaterials nicht möglich ist, da keine Erfassung des gesamten Fasermaterials erfolgt sondern nur gezielt nach Verunreinigungen gesucht wird.

Zur Verbesserung der Ausscheidung von Fremdstoffen wurde durch die DE 100 63 861 A1 wie auch durch die CH 697 063 A5 auch eine Überwachung der ausgeschleusten Stoffe offenbart. Entsprechend der Überwachung wird eine Reinigungsintensität der entsprechenden Reinigungsstellen eingestellt und derart versucht einen optimalen Reinigungsprozess zu erreichen. Auch die EP 0 399 315 A1 offenbart einen Sensor welcher den Schmutzanteil im durch eine Reinigungsmaschine abgeschiedenen Abgang in dessen Sammelbehälter überwacht zur Maximierung des abgeschiedenen Schmutzanteils. Nachteilig an diesen Vorrichtungen ist, dass sie eine Erkennung und Analyse der aus dem Prozess zu entnehmenden oder bereits entnommenen Stoffe vorsehen, jedoch keine Aussage zu dem im Prozess verbliebenen Fasergut machen können. Auch führt eine Aktion welche aufgrund der vorgesehenen Massnahmen vorgenommen wird jeweils nur zu Konsequenzen (Optimierung respektive Verbesserung) des Verfahrens in der betroffenen oder möglicherweise noch einer im Prozessverlauf nachfolgenden Maschine.

Die CH 696 908 A5 offenbart eine Karde mit einer Vorrichtung zur Überwachung des Innenraumes einer Maschinenverkleidung mit Hilfe von Kameras. Dabei soll eine Überwachung der Zustände und Vorgänge innerhalb des Maschinengehäuses ermöglicht werden ohne dass die Maschinenverkleidung geöffnet oder entfernt werden muss. Nachteilig an der Vorrichtung ist, dass eine Beurteilung der Vorgänge nur innerhalb der Maschinenverkleidung, jedoch nicht innerhalb der Maschine selbst möglich ist.

Auch aus dem Stand der Technik bekannt ist die Vorgehensweise einer Probennahme. Dabei wird periodisch an den einzelnen Faservorbereitungsmaschinen eine Probe des Faserguts entnommen und dieses auf entsprechenden Labormaschinen untersucht. Nachteilig daran ist, dass diese Verfahrensweise zum einen zeitaufwändig ist und zum anderen die Resultate der Analyse zeitverzögert zur Verfügung stehen und nicht den aktuellen Staus wiedergeben. Durch nicht genau identisches ziehen der Proben entsteht eine zusätzliche Streuung der Resultate. Untersuchungen im Labor sind sehr zeitintensiv und dadurch werden nur wenige Proben gezogen, wodurch weiterhin eine hohe Unsicherheit der Resultate vorhanden ist.

Die Aufgabe der Erfindung ist es demnach eine Vorrichtung zu schaffen, welche eine Beobachtung des zu bearbeitenden Faserguts in Echtzeit ermöglicht und dabei die Grundlagen für eine mögliche Bewertung des Faserguts schafft die zur Optimierung der Prozesse in der Bearbeitung des Faserguts in der gesamten Faservorbereitung verwendet werden kann.

Die Aufgabe wird gelöst durch eine Vorrichtung mit den Merkmalen des unabhängigen Anspruchs.

Zur Lösung der Aufgabe wird eine neuartige Faservorbereitungsmaschine zur Bearbeitung von Fasergut vorgeschlagen, wobei die Faservorbereitungsmaschine einen Speicher oder Füllschacht zur Bevorratung des Faserguts vor oder nach der Bearbeitung aufweist und eine in den Innenraum des Speichers oder Füllschachts gerichtete Kamera vorgesehen ist. Faservorbereitungsmaschinen sind aufgrund des Bearbeitungsvorganges mit einem Speicher oder Füllschacht ausgerüstet. In einem Speicher oder Füllschacht wird eine bestimmte Menge an Fasergut für die Maschine vorgehalten um bei der Bearbeitung den Zustand des Faserguts, beispielsweise bezüglich seiner Dichte oder eines Auflagedrucks am Austritt aus dem Speicher oder Füllschacht, konstant zu halten respektive prozessbedingt bestimmen zu können. Typischerweise weisen Reinigungsmaschinen, Zwischenspeicher (sogenannte Kondenser) oder Mischer Speicher auf. Bei einem Mischprozess wird das Fasergut in mehrere Mischkammern verteilt und aus diesen nach einem bestimmten Verfahren wieder entnommen, was zu einer Durchmischung des Fasergutes führt. Die einzelnen Mischkammern dienen dabei als Speicher.

Faservorbereitungsmaschinen wie beispielsweise Karden, welche auf eine exakte und kontinuierliche Dosierung des Faserguts angewiesen sind, sind mit Füllschächten ausgestattet. Eine Befüllung der Füllschächte erfolgt meist durch ein pneumatisches Transportsystem. Dabei wird das Fasergut mit einer Förderleistung in den Füllschacht eingebracht welche grösser ist als der tatsächliche Verbrauch der Karde. Der Füllschacht dient als Puffer. Das im Füllschacht stehende Fasergut eignet sich mit seiner Oberfläche für die Überwachung respektive optische Erfassung mit einer Kamera.

Weiter kann es notwendig sein, das Fasergut zwischen einzelnen Bearbeitungsprozessen zu lagern. Zu diesem Zweck wird Fasergut beispielsweise in sogenannte Kannen abgefüllt. Die Kannen werden als Speicher genutzt und dienen einerseits der Aufbewahrung des Zwischenprodukts und andrerseits als Transportmittel um das Fasergut von einer Bearbeitung zur Nächsten zu bringen, beispielsweise von einer Karde zu einer Strecke. Kannen werden auch dazu benutzt das fertig bearbeitete Fasergut aus der Vorbereitung in eine Spinnerei zu bringen. Weiter wird am Beginn der Faservorbereitung das Fasergut in Form von Faserballen vorgehalten. Die Faserballen sind ebenfalls als ein Speicher zu betrachten, da es sich um ein bestimmtes und begrenztes Volumen handelt. Die Faserballen werden in einer Ballenpresse geformt und gebunden sodass sie als Stückgut transportiert und gelagert werden können.

Eine Sichtachse der Kamera ist mit einem Winkel α zur Vertikalen auf eine Oberfläche des Faserguts in einem Bereich von plus 30 Winkelgraden bis minus 30 Winkelgraden ausgerichtet. Die Vertikale auf die Oberfläche des Faserguts entspricht dem Lot (oder Senkrechten) zu einer durch eine Begrenzung des Speichers oder Füllschachtes oder die Schwerkraft geschaffenen Oberfläche des Faserguts. Die Vertikale auf die Oberfläche des Faserguts kann demnach schief im Raum stehen im Falle einer schiefen Begrenzung eines Speichers, beispielsweise in Form eines Trichters. Die Sichtachse liegt im Zentrum eines Sichtfeldes der Kamera. Die Grösse des Sichtfeldes ist dabei abhängig von einer Fokussierung sowie dem Abstand zwischen der Kamera und der optisch zu betrachtenden Oberfläche des Faserguts. Eine möglichst senkrechte Betrachtung der Oberfläche des Fasergutes ergibt erfahrungsgemäss die besten Voraussetzungen für eine mögliche Auswertung der optischen Aufnahmen. Eine von der Seite aufgenommene Oberfläche zeigt einen Schattenwurf, welcher durch die unregelmässige Oberfläche bedingt durch teilweise flockenartiges Fasergut auftreten kann. Aufgrund dessen ist eine Sichtachse der Kamera welche in der Vertikalen zur Oberfläche des Faserguts angeordnet ist besonders zu bevorzugen.

Die Kamera weist eine Auflösung auf, welche zur Detektion von einem Partikel mit einer Ausdehnung von 0.1 mm² auf der Oberfläche des Fasergutes ermöglicht. Ein Partikel mit einer Ausdehnung von 0.1 mm² entspricht der Grösse eines Staubkorns. Die Erfassung eines einzelnen Staubkorns ist notwendig, wenn die einzelnen Bestandteile des Faserguts katalogisiert werden sollen. Es hat sich gezeigt, dass mit dieser Auflösung eine gute Bewertung der optischen Aufnahmen erfolgen kann. Als Kameratyp können einfache CCD-Kameras oder RGB-Kameras eingesetzt werden.

Vorteilhafterweise ist eine in den Innenraum des Speichers oder Füllschachts gerichtete Lichtquelle vorgesehen. Durch diese separate Lichtquelle kann der Frequenzbereich von Lichtquelle und Kamera aufeinander abgestimmt werden, sodass eine optische Erfassung der Oberfläche des Faserguts über die Zeit unter gleichen Bedingungen möglich ist. Weiter ist es von Vorteil, wenn die Lichtquelle in der Sichtachse der Kamera ausgerichtet ist. Dadurch wird eine grösstmögliche Ausbeute der durch die Lichtquelle erzeugten Beleuchtungsstärke erreicht.

Die Lichtquelle kann derart gestaltet sein, dass sie für verschiedene Spektren verwendet werden kann, indem sie über mehrere Strahlungsquellen verfügt oder durch entsprechende Vorschaltfilter umgeschaltet werden kann. Es hat sich jedoch gezeigt, dass mit Wellenlängen aus dem gesamten Spektrum von Ultraviolett bis Infrarot gute Resultate zu erzielen sind. Wichtiger als die verwendete Wellenlänge ist die Beleuchtungsstärke der Lichtquelle, diese sollte vorteilhafterweise mindestens 800 Lux bevorzugterweise mehr als 1200 Lux betragen. Besonders bevorzugter werden als Lichtquelle einer oder mehrere Elektronenblitzgeräte verwendet, dabei kann eine Beleuchtungsstärke von mehr als 10000 Lux erreicht werden.

Vorteilhafterweise ist die Kamera im Speicher oder Füllschacht angeordnet. Dadurch kann einerseits auf einen aufwändigen Aufbau verzichtet werden und andrerseits ist eine einfache Nachrüstung von bestehenden Faservorbereitungsmaschinen möglich. In einer alternativen Ausführungsform ist die Kamera bevorzugterweise ausserhalb des Speichers oder Füllschachts angeordnet. Dies hat den Vorteil, dass die Kamera für Wartung und Unterhalt einfach zugänglich ist. Arbeiten an der Kamera können damit auch unabhängig vom Betrieb der Faservorbereitungsmaschinen durchgeführt werden.

Die Kamera ist vorteilhafterweise in einem Gehäuse verbaut, wobei zwischen dem Gehäuse und dem Speicher oder Füllschacht eine transparente Abgrenzung vorgesehen ist. Auf diese Weise kann eine kompakte Bauweise vorgesehen werden, welche für verschiedene Faserverarbeitungsmaschinen eingesetzt werden kann. Zudem schützt das Gehäuse die Kamera vor Staub und anderen Umwelteinflüssen. Durch die transparente Abgrenzung, beispielsweise eine Scheibe oder Folie verbleibt der Speicher oder Füllschacht in sich geschlossen und sein Inhalt wird nicht durch äussere Einflüsse beeinträchtigt. Die Kamera ist dabei vorteilhafterweise an einer Seitenwand des Speichers oder Füllschachtes angeordnet, sodass das Fasergut durch den Durchlauf durch den Speicher respektive Füllschacht langsam an der Abgrenzung vorbeifliesst. Dies hat den Effekt, dass einerseits eine ebene Oberfläche des Faserguts für die Bilderfassung zur Verfügung steht und gleichzeitig die Abgrenzung durch das vorbei fliessende Fasergut sauber gehalten wird.

In der Anwendung der Vorrichtung für Speicher ohne seitliche Begrenzung, wie beispielsweise Faserballen, kann die Kamera mit Ihrem Gehäuse mit der transparenten Abgrenzung auf die Ballenoberfläche aufgesetzt werden und auf diese Weise eine Kamerastellung mit einem Winkel α zur Vertikalen auf eine Oberfläche des Faserguts in einem Bereich von plus 30 Winkelgraden bis minus 30 Winkelgraden erreicht werden. In einer Weiterentwicklung ist das Gehäuse an einem Abtragorgan des Ballenöffners befestigt, was eine Erfassung der Oberfläche der Faserballen mit der Kamera nach jedem Durchgang des Abtragorgans ermöglicht. Damit ist eine kontinuierliche Überwachung des Zustandes respektive der Qualität des Fasergutes in den Faserballen während des gesamten Abtragvorganges möglich. Dabei ist es auch denkbar durch die gewonnen Erkenntnisse eine Abtragreihenfolge der einzelnen Faserballen durch das Abtragorgan zu optimieren.

Alternativ kann die Kamera eine Vorsatzlinse mit einer Reinigungsvorrichtung auf oder die transparente Abgrenzung ist mit einer entsprechenden Reinigungsvorrichtung versehen. Reinigungsvorrichtungen sind aus dem Stand der Technik bekannt, beispielsweise kann eine Art Scheibenwischer oder eine sich über die Abgrenzung bewegende Folie verwendet werden. Ebenfalls ist eine Reinigung durch einen periodischen Luftstoss denkbar.

In einer Weiterentwicklung der Erfindung ist die Kamera mit einer Bildauswertung verbunden, wobei die Bildauswertung bevorzugterweise mit Hilfe eines neuronalen Netzwerks vorgesehen ist. Ein durch die optische Bilderfassung erzeugtes Bild wird mit Hilfe eines neuronalen Netzwerks analysiert. Neuronale Netzwerke sind in der Lage, große Mengen an unstrukturierten Daten, beispielsweise Bilder, besonders gut auszuwerten und Muster in ihnen zu finden. Ein Neuron ist eine mathematische Formel, die einen Input verarbeitet und daraus einen Output generiert. Die Werte der Formel werden dabei durch die Ausgangsdaten definiert. Viele künstliche Neuronen arbeiten zusammen und ergeben so ein künstliches neuronales Netzwerk. Damit neuronale Netze funktionieren, benötigen sie Daten, deren Ergebnis sie kennen, um aus diesen zu lernen, dieser Prozess wird Training genannt. Dabei werden vorhandene Bilder manuell ausgewertet und das Resultat dem Netzwerk zur Verfügung gestellt. Das Netzwerk führt in der Folge eine Berechnung aus und schaut, ob diese zum erwarteten Ergebnis passt. Das neuronale Netzwerk nimmt ein Bild, löst die einzelnen Pixel in Daten auf (zum Beispiel einen Farbwert) und berechnet dann mit diesen Daten in einer komplexen Formel ein Ergebnis, das es danach mit dem Resultat der manuellen Auswertung vergleicht. Stimmen Ergebnis der Formel und die manuelle Auswertung überein, hat das Netzwerk ein Bild richtig erkannt. Stimmen Ergebnis der Formel und manuelle Auswertung nicht überein, stimmt die Berechnung noch nicht und es muss noch weitertrainieren.

Ein neuronales Netzwerk löst diese Berechnung nicht durch Wissen, sondern durch Ausprobieren - es optimiert die einzelnen Werte in den Neuronen solange, bis das tatsächliche Ergebnis dem gewünschten Ergebnis entspricht. Dabei werden üblicherweise tausende von Parametern gleichzeitig angepasst, in vielen sehr kleinen Schritten. Diese Schritte werden nun wiederholt - viele Tausende bis Millionen Male und nicht nur mit einem Bild, sondern mit vielen verschiedenen Bildern. Jedes Mal verändern sich die Neuronenwerte dabei ein wenig. Am Ende dieses Prozesses sind die Neuronen dann aber so fit, dass sie in Bildern Gutfasern von Trash unterscheiden können. Das neuronale Netzwerk kann in der Folge nicht nur die Bilder unterscheiden, die es bereits kennt und gelernt hat richtig einzuordnen, es kann dies auch bei Bildern, die es noch nie gesehen hat. Das Netzwerk hat von den Trainingsbildern ein allgemeines Muster abstrahiert, das es nun auf neue Bilder anwenden kann.

Im Folgenden wird die Erfindung anhand von einer beispielhaften Ausführungsform erklärt und durch Zeichnungen näher erläutert. Es zeigen
- **Figur 1 bis 4**: schematische Darstellungen von Faservorbereitungsmaschinen mit einer erfindungsgemässen Vorrichtung und
- **Figur 5**: eine schematische Darstellung einer Kamera nach der Erfindung.

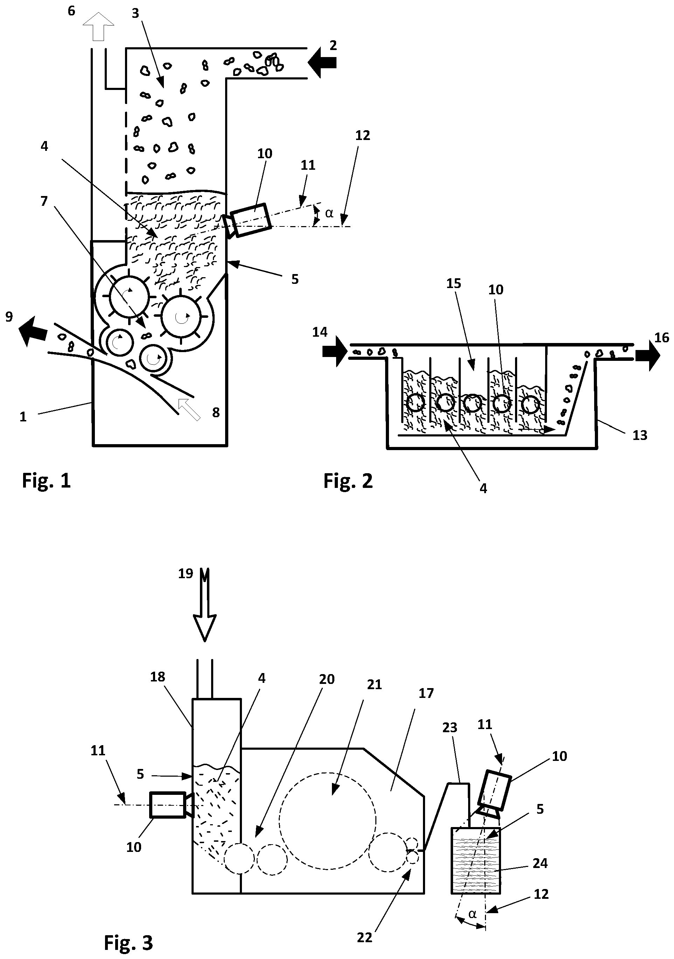

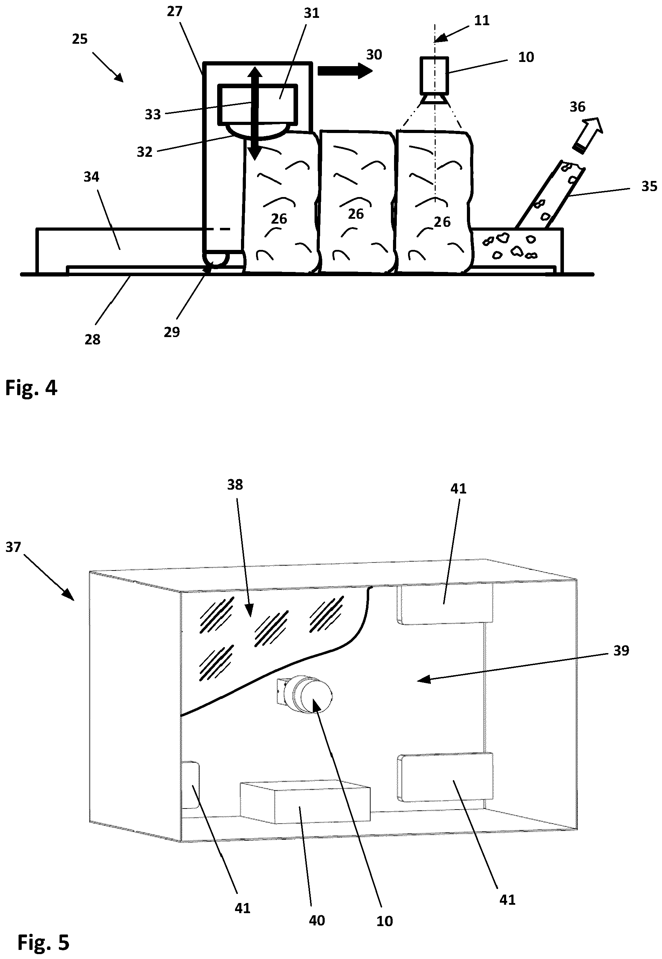

Figur 1 zeigt eine schematische Darstellung einer Reinigungsmaschine 1 mit einem Speicher 3. Das Fasergut 4 wird über eine pneumatische Förderung durch den Eintritt 2 in den Speicher 3 eingebracht, meist in Flockenform. Im oberen Bereich des Speichers 3 wird das Fasergut 4 von der Transportluft getrennt und die Transportluft wird als Abluft 6 aus dem Speicher 3 abgeführt. Das Fasergut 4 sammelt sich im unteren Bereich des Speichers 3. Aus dem Speicher 3 wird das Fasergut 2 durch eine Dosier- und Öffnungsvorrichtung 7 wieder entnommen und mit Förderluft 8 über den Austritt 9 der weiteren Bearbeitung zugeführt. Das Fasergut bildet bedingt durch die Begrenzungen des Speichers seitliche glatte Oberflächen. Gegen eine Oberfläche 5 des Faserguts 4 ist eine Kamera 10 mit einer Sichtachse 11 vorgesehen. In der gezeigten Ausführung ist die Kamera 10 unter einem Winkel α zu einer Vertikalen 12 zur Oberfläche 5 des Faserguts angeordnet, wobei der Winkel α weniger als 30 Winkelgrade beträgt. Die Kamera 10 ist schematisch dargestellt. Zur Anwendung ist jedoch beispielsweise eine Ausführung der Kamera 10 wie in Figur 5 gezeigt vorzusehen.

Figur 2 zeigt eine schematische Darstellung eines Mischers 13. In einem Mischer 13 wird das durch den Eintritt 14 in den Mischer 13 gelangende Fasergut 4 auf mehrere hintereinander angeordnete Mischkammern 15 verteilt. Durch eine für alle Mischkammern 15 gemeinsam vorgesehene und unterhalb der Mischkammern 15 angeordnete Förderung des Faserguts 4 wird das aus den verschiedenen Mischkammern 15 entnommene Fasergut 4 durchmischt und über Steigförderer dem Austritt 16 des Mischers 13 zugeführt. Seitlich der Mischkammern 15 sind Kameras 10 angeordnet, wobei die Kameras 10 mit ihrer Sichtachse 11 senkrecht auf die Oberfläche 5 des sich in der Mischkammer 15 befindlichen Faserguts 4 gerichtet sind.

Figur 3 zeigt eine schematische Darstellung einer Karde 17 mit einem Füllschacht 18. Das Fasergut 4 wird über einen Eintritt 19 in den Füllschacht 18 eingebracht. Seitlich des Füllschachtes 18 ist eine Kamera 10 angeordnet welche mit ihrer Sichtachse 11 senkrecht auf die Oberfläche 5 des im Füllschacht 18 befindlichen Faserguts 4 gerichtet ist. Aus dem Füllschacht 18 wird das Fasergut 4 anschliessend ausgetragen und in einem Vorreisser 20 grob gereinigt und vom Vorreisser 20 an eine Trommel 21 übergeben. Am Umfang der Trommel 21 wird das Fasergut 4 weiter gereinigt und die einzelnen Fasern werden parallelisiert. Anschliessend gelangt das Fasergut 4 über einen Abnehmer in eine Bandbildungseinheit 22, durch welche die Fasern zu einem Faserband 23 geformt werden. In der Folge verlässt das Faserband 23 die Karde 17 und wird in einer Ablagevorrichtung in eine Kanne 24 abgelegt. Die Kanne 24 wird als Speicher für das die Karde 17 verlassende Fasergut 4 in Form eines Faserbandes 23 genutzt. Über der Kanne 24 ist eine Kamera 10 angeordnet, welche mit ihrer Sichtachse 11 auf die Oberfläche 5 des sich in der Kanne 24 befindlichen Faserbandes 23 gerichtet ist. Eine Vertikale 12 zur Oberfläche 5 des in der Kanne 24 befindlichen Faserbandes 23 ist in der gezeigten Anordnung in ihrer Richtung identisch mit einer Vertikalachse der Kanne 24 selbst. Die Kamera 10 ist mit Ihrer Sichtachse 11 unter dem Winkel α zur Vertikalen 12 angeordnet. Es besteht auch die Möglichkeit eine Kamera 10 auf bereits fertig befüllte und aus der Ablagevorrichtung entnommene Kannen 24 zu richten. In diesem Fall ist es möglich, die Kamera 10 mit ihrer Sichtachse 11 in Richtung der Vertikalachse 12 anzuordnen.

Figur 4 zeigt eine schematische Darstellung eines Ballenöffners 25 und zur Abtragung bereitgestellte Faserballen 26. Der Ballenöffner 25 weist einen Abtragturm 27 auf welcher mit einem Fahrwerk 29 auf Schienen 28 den Faserballen 26 entlang in Fahrtrichtung 30 verfahrbar ist. Am Abtragturm 27 ist ein Abtragarm 31 mit einem Abtragorgan 32 derart befestigt, dass der Abtragarm 31 zusammen mit dem Abtragorgan 32 durch einen Hub 33 in der Höhe verstellbar ist. Beim Überfahren der Faserballen 26 durch den Abtragturm 27 wird die Höhe des Abtragarms 31 derart eingestellt, dass durch das Abtragorgan 32 eine obere Schicht Fasergut von den Faserballen 26 abgetragen wird. Das abgetragene Fasergut wird in einem Sammelkanal 34 welcher über die gesamte befahrbare Länge des Ballenöffners 25 führt gesammelt und mit Hilfe einer Saugförderung (nicht gezeigt) aus dem Sammelkanal 34 abtransportiert. Ein so gebildeter Förderstrom 36 von Fasergut wird über einen Austritt 35 an die nächste Maschine in der Faservorbereitungsanlage weitergegeben. Über den Faserballen ist eine Kamera 10 angeordnet, welche mit ihrer Sichtachse 11 auf die Oberfläche der Faserballen 26 gerichtet ist. In einer nicht gezeigten Ausführung ist die Kamera 10 am Abtragarm 31 des Ballenöffners 25 befestigt. Dadurch fährt die Kamera 10 mit dem Abtragturm 27 mit und hat durch den hub 33 des Abtragarms 31 immer den gleichen Abstand zur Oberfläche der Faserballen 26.

Figur 5 zeigt eine schematische Darstellung einer Kamera 10 nach der Erfindung. Die Kamera 10 ist in ein Gehäuse 37 eingefügt. Die Kamera 10 ist an der Rückwand 39 des Gehäuses 37 befestigt. Die Vorderseite gegenüber der Rückwand 39 ist mit einer transparenten Abgrenzung 38 versehen. Weiter sind im Gehäuse 37 um die Kamera herum Lichtquellen 41 in der Ausbildung als Elektronenblitzgeräte angeordnet. Ebenfalls im Gehäuse 37 ist ein für Kamera 10 und Lichtquellen 41 notwendiges Steuergerät 40 untergebracht. Bei der Montage des Gehäuses 37 an einen Speicher ersetzt die transparente Abgrenzung 38 jeweils den entsprechenden Bereich einer Seitenwand des Speichers.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1: Reinigungsmaschine
- 2: Eintritt
- 3: Speicher
- 4: Fasergut
- 5: Oberfläche Fasergut
- 6: Abluft
- 7: Dosier- und Öffnungseinheit
- 8: Förderluft
- 9: Fasergutstrom
- 10: Kamera
- 11: Sichtachse Kamera
- 12: Vertikale auf die Oberfläche
- 13: Mischer
- 14: Eintritt Mischer
- 15: Mischkammer
- 16: Austritt Mischer
- 17: Karde
- 18: Füllschacht
- 19: Eintritt Karde
- 20: Vorreisser
- 21: Trommel
- 22: Bandbildungseinheit
- 23: Faserband
- 24: Kanne
- 25: Ballenöffner
- 26: Faserballe
- 27: Abtragturm
- 28: Schiene
- 29: Fahrwerk
- 30: Fahrtrichtung
- 31: Abtragarm
- 32: Abtragorgan
- 33: Hub
- 34: Sammelkanal
- 35: Austritt
- 36: Förderstrom
- 37: Gehäuse
- 38: Abgrenzung
- 39: Rückwand
- 40: Steuergerät
- 41: Lichtquelle
- α: Winkel

## Patentansprüche

1. Faservorbereitungsmaschine (1, 13, 17, 25) zur Bearbeitung von Fasergut (4) mit einem Speicher (3, 15, 24) oder Füllschacht (18) zur Bevorratung des Faserguts (4) vor oder nach der Bearbeitung, wobei eine in den Innenraum des Speichers (3, 15, 24) oder Füllschachts (18) gerichtete Kamera (10) vorgesehen ist, **dadurch gekennzeichnet, dass** eine Sichtachse (11) der Kamera (10) mit einem Winkel (a) zu einer Vertikalen (12) auf eine Oberfläche (5) des Faserguts (4) in einem Bereich von plus 30 Winkelgraden bis minus 30 Winkelgraden ausgerichtet ist und dass die Kamera (10) eine Auflösung zur Detektion von einem Partikel mit einer Ausdehnung von 0.1 mm² auf der Oberfläche (5) des Faserguts (4) aufweist.

2. Faservorbereitungsmaschine (1, 13, 17, 25) nach Anspruch 1, **dadurch gekennzeichnet, dass** eine Sichtachse (11) der Kamera (10) in der Vertikalen (12) auf die Oberfläche (5) des Faserguts (4) angeordnet ist.

3. Faservorbereitungsmaschine (1, 13, 17, 25) nach einem der vorangehenden Ansprüche, **dadurch gekennzeichnet, dass** eine in den Innenraum des Speichers (3, 15, 24) oder Füllschachts (18) gerichtete Lichtquelle (40) vorgesehen ist.

4. Faservorbereitungsmaschine (1, 13, 17, 25) nach einem der vorangehenden Ansprüche, **dadurch gekennzeichnet, dass** die Lichtquelle (40) in der Sichtachse (11) der Kamera (10) ausgerichtet ist.

5. Faservorbereitungsmaschine (1, 13, 17, 25) nach einem der vorangehenden Ansprüche, **dadurch gekennzeichnet, dass** die Lichtquelle (40) eine Beleuchtungsstärke von mindestens 800 Lux aufweist.

6. Faservorbereitungsmaschine (1, 13, 17, 25) nach einem der vorangehenden Ansprüche, **dadurch gekennzeichnet, dass** die Kamera (10) im Speicher (3, 15, 24) oder Füllschacht (18) angeordnet ist.

7. Faservorbereitungsmaschine (1, 13, 17, 25) nach einem der Ansprüche 1 bis 5, **dadurch gekennzeichnet, dass** die Kamera (10) ausserhalb des Speichers (3, 15, 24) oder Füllschachts (18) angeordnet ist.

8. Faservorbereitungsmaschine (1, 13, 17, 25) nach Anspruch 7, **dadurch gekennzeichnet, dass** die Kamera (10) in einem Gehäuse (36) verbaut ist, wobei zwischen dem Gehäuse (36) und dem Speicher (3, 15, 24) oder Füllschacht (18) eine transparente Abgrenzung (37) vorgesehen ist.

9. Faservorbereitungsmaschine (1, 13, 17, 25) nach Anspruch 7 oder 8, **dadurch gekennzeichnet, dass** die Kamera (10) an einer Seitenwand des Speichers oder Füllschachtes angeordnet ist.

10. Faservorbereitungsmaschine (1, 13, 17, 25) nach einem der vorangehenden Ansprüche, **dadurch gekennzeichnet, dass** die Kamera (10) eine Vorsatzlinse (38) mit einer Reinigungsvorrichtung (39) aufweist.

11. Faservorbereitungsmaschine (1, 13, 17, 25) nach einem der Ansprüche 8 bis 10, **dadurch gekennzeichnet, dass** die transparente Abgrenzung (37) mit einer Reinigungsvorrichtung (39) versehen ist.

12. Faservorbereitungsmaschine (1, 13, 17, 25) nach einem der vorangehenden Ansprüche, **dadurch gekennzeichnet, dass** die Kamera (10) mit einer Bildauswertung verbunden ist.

13. Faservorbereitungsmaschine (1, 13, 17, 25) nach Anspruch 13, **dadurch gekennzeichnet, dass** die Bildauswertung mit Hilfe eines neuronalen Netzwerks vorgesehen ist.
